# EUROPÄISCHE PATENTANMELDUNG

(11) **EP 2 113 400 A1**
(43) Veröffentlichungstag der Anmeldung: **04.11.2009**
(21) Anmeldenummer: 09153261.4
(22) Anmeldetag: 20.02.2009
(51) Int. Cl.: B60C 11/24

(54) **Fahrzeugluftreifen mit einer Profilgestaltung mit Abriebsindikator**

(30) Priorität: 29.04.2008 DE 102008021497
(71) Anmelder: Continental Aktiengesellschaft, 30165 Hannover (DE)
(72) Erfinder: Behr, Ulrich, 30169 Hannover (DE)
(74) Vertreter: Finger, Karsten

(57) **Zusammenfassung**

Die Erfindung betrifft einen Fahrzeugluftreifen mit einer mantelförmigen Lauffläche, welche eine Profilgestaltung aus Profilpositiven (4) aufweist, wobei die Profilpositiven (4) durch Rillen voneinander getrennt sind, wobei wenigstens eine Rille eine Hauptrille ist und wobei wenigstens ein Abriebindikator (2) in der Lauffläche angeordnet ist.

Die Erfindung zeichnet sich dadurch aus, dass der Abriebindikator (2) ein Profilpositiv (4) einer bestimmten Höhe (h), nämlich der Höhe der anzuzeigenden Restprofiltiefe ist, dass der Abriebindikator (2) in der Hauptrille angeordnet ist, dass der Abriebindikator (2) eine axiale Breite (b) aufweist, welche höchstens der halben Breite der Umfangsrille entspricht und dass auf der, der mantelförmigen Fläche parallelen Fläche (6) des Abriebindikators (2) eine erhabene Struktur (7) angeordnet ist, nach deren Abrieb die anzuzeigende Restprofiltiefe erreicht ist.

## Beschreibung

Die Erfindung betrifft einen Fahrzeugluftreifen mit einer mantelförmigen Lauffläche, welche eine Profilgestaltung aus Profilpositiven aufweist, wobei die Profilpositiven durch Rillen voneinander getrennt sind, wobei wenigstens eine Rille eine Hauptrille ist und wobei wenigstens ein Abriebindikator in der Lauffläche angeordnet ist.

Die Bereifung von Kraftfahrzeugen ist für den Fahrzeugkomfort und die Sicherheit bei der Fahrzeugführung von ausschlaggebender Bedeutung, weshalb die Laufstreifenprofile sowohl in ihrer Gestaltung als auch die verwendeten Gummimischungen ständig verbessert werden. Voraussetzung für die sichere Fahrzeugführung ist im Allgemeinen eine ausreichend große Profiltiefe, die insbesondere bei nassen Fahrbahnen zur Aufnahme und Ableitung des Wassers notwendig ist. Für Fahrzeugreifen gebieten gesetzliche Vorschriften eine Mindestprofiltiefe, wobei beispielsweise in Deutschland eine Mindestprofiltiefe von 1,6mm vorgeschrieben ist. Es hat sich jedoch gezeigt, dass eine erhöhte Gefahr von Aquaplaning ab einer Mindestprofiltiefe von 3mm besteht.

Als Hauptrillen werden die breiten Profilrillen im Hauptprofil der Lauffläche verstanden, wobei das Hauptprofil durch die breiten Profilrillen im mittleren Bereich der Lauffläche gebildet werden, der etwa ¾ der Laufflächenbreite einnimmt.

Es gibt Abriebindikatoren für die Mindestprofiltiefe von 1,6mm für Sommerreifen. Jedoch wird in vielen Fällen der Mindestwert von 1,6mm und/oder 3mm, ab dessen Unterschreitung eine erhöhte Gefahr von Aquaplaning besteht, nicht beachtet und daher unterschritten. In anderen Fällen werden Reifen bereits ausgetauscht, obgleich sie noch eine größere Profiltiefe aufweisen. Diese Handlungsweisen sind im wesentlichen darauf zurückzuführen, dass die jeweilige Restprofiltiefe nicht ohne weiteres erkennbar ist, sondern mit besonderen Messgeräten gemessen werden muss, die dem Kraftfahrzeugführer entweder nicht ständig zur Verfügung stehen oder nicht sorgfältig gehandhabt werden, so dass in der Regel Messfehler nicht ausgeschlossen werden können.

Verschiedenste Abriebindikatoren sind aus dem Stand der Technik hinreichend bekannt. In dem G 91 11 582.5 U1 wird beispielsweise vorgeschlagen, den Laufstreifen aus zwei unterschiedlichen Gummimischungen zu fertigen, wobei nach Abrieb des Laufstreifens bei Erreichen der Mindestprofiltiefe die zweite Gummimischung, welche andere optische Eigenschaften aufweist, sichtbar wird und als Indikator dient. Nachteilig ist jedoch, dass es für den Kraftfahrzeugführer nicht ersichtlich ist, wann er mit dem Erreichen der Restprofiltiefe zu rechnen hat. Erst beim Erreichen der Restprofiltiefe ist das andersfarbig gestaltete Profil erkennbar.

Aus der DE 600 27 088 T2 ist es bekannt, mehrere Abriebindikatoren, welche unterschiedliche Restprofiltiefen innerhalb eines Laufstreifenprofils anzeigen, in die Profilpositiven als unterschiedlich tiefe Feineinschnitte zu integrieren. Die Restprofiltiefen sind in Form von Zahlen als Feineinschnitte, welche die Restprofiltiefen in mm anzeigen, angeordnet. Aus der DE 600 27 088 T2 ist es weiterhin bekannt geworden, eine Rille mit Gummimaterial über deren gesamte axiale Rillenbreite zu verfüllen und die Information über die Restprofiltiefe gebenden Feineinschnitte in der Rillenfüllung anzuordnen. Die Anordnung von Lamellenblechen in der Vulkanisierform, welche die entsprechenden Feineinschnitte in das Laufstreifenprofilelement einprägen ist aufwendig und teuer. Die Vulkanisierform ist durch die Anordnung von Lamellenblechen schwieriger zu reinigen. Durch die Verfüllung einer Rille mit Gummimaterial ist die Aufnahme- und Ableitfähigkeit von Wasser erheblich verschlechtert.

Es ist daher die Aufgabe der vorliegenden Erfindung, einen Fahrzeugreifen mit einem Abriebindikator im Laufstreifen bereitzustellen, der einfach und kostengünstig herstellbar ist und der sicher Auskunft über das Erreichen einer kritischen Restprofiltiefe gibt. Zudem soll das Wasseraufnahme- und Ableitvermögen nur unwesentlich beeinflusst sein.

Die Aufgabe wird gelöst, indem der Abriebindikator ein Profilpositiv einer bestimmten Höhe, nämlich der Höhe der anzuzeigenden Restprofiltiefe ist, dass der Abriebindikator in der Hauptrille angeordnet ist und dass auf der, der mantelförmigen Fläche parallelen Fläche des Abriebindikators eine Struktur angeordnet ist, nach deren Abrieb die anzuzeigende Restprofiltiefe erreicht ist und wenn der Abriebindikator eine axiale Breite aufweist, welche höchstens der halben Breite der Hauptrille entspricht.

Erfindungswesentlich ist, dass der Abriebindikator ein in einer Hauptrille angeordnetes Profilpositiv ist, welches eine geringere (radiale) Höhe aufweist, als die den Laufstreifen bildenden Profilpositive. Die Höhe des Abriebindikator-Profilpositivs ist diejenige Höhe, welche durch den Abriebindikator angezeigt werden soll. Auf seiner der mantelförmigen Laufstreifenfläche parallelen Oberfläche weist der Abriebindikator eine erhabene Struktur auf, nach deren Abrieb die anzuzeigende Restprofiltiefe erreicht ist. Ein derartiger Abriebindikator ist kostengünstig und einfach mit einer Vulkanisierform zu formen. Für ein gutes Wasserdrainagevermögen weist der Abriebindikator eine axiale Breite auf, welche höchstens der halben Breite der Hauptrille entspricht. Somit ist der Rillenquerschnitt nur geringfügig im Bereich des Abriebindikators in seiner axialen Breite verjüngt, so dass das Wasser zuverlässig durch den verbleibenden Restquerschnitt der Rille aufnehm- und ableitbar ist. Im Stand der Technik hingegen ist die axiale Breite der Rille komplett mit Gummi gefüllt, so dass das Wasserdrainagevermögen erheblich behindert ist und somit das Ableitvermögen nachteilig verschlechtert ist.

Vorteilhaft ist es, wenn die Hauptrille eine Umfangsrille ist. Umfangsrillen weisen in der Regel einen besonders breiten Rillenquerschnitt auf, so dass der Abriebindikator besonders gut in Bezug auf das Wasserableitvermögen als auch in Bezug auf die Erkenntlichkeit für den Fahrzeughalter in der Umfangsrille anzuordnen ist.

Zweckmäßig ist es, wenn die erhabene Struktur eine Erhöhung zwischen 0,1mm bis 1mm ist. Somit ist die Struktur als Zeichen, dass die Restprofiltiefe noch nicht erreicht ist, gut erkennbar. Zur Erhöhung der besseren Kenntlichkeit ist es vorteilhaft, wenn die erhabene Struktur aus einer anderen Kautschukmischung mit optisch anderen Eigenschaften, vorzugsweise einer anderen Farbe, besteht. Besonders markant ist die Struktur in Form eines Kreuzes.

In einer bevorzugten Ausführungsform ist der Abriebindikator in Umfangsrichtung beabstandet von einer in die Umfangsrille einmündenden Querrille angeordnet ist. Durch eine derartige Anordnung ist die Wasserableitung von der Umfangsrille in Richtung Querrille nicht behindert.

Zweckmäßig ist es, wenn das Profilpositiv des Abriebindikators in etwa die Form eines Rechtecks aufweist. Eine derartige Form weist ein vergleichsweise geringes Volumen auf und erfordert nur einen geringen zusätzlichen Materialaufwand.

In einer besonders bevorzugten Ausführungsform weist das Profilpositiv des Abriebindikators eine Höhe von 3mm auf. Dieser Abriebindikator weist auf eine erhöhte Aquaplaninggefahr bei Unterschreitung einer Restprofiltiefe von 3mm hin. Das Profilpositiv des Abriebindikators kann eine Länge in Umfangsrichtung von mindestens 3mm aufweist. Dieser Aquaplaning-Abriebindikator kann zusätzlich zu den Abriebindikatoren von 1,6mm, der gesetzlich vorgeschriebenen Restprofiltiefe bei Sommerreifen, angeordnet sein.

Vorteilhaft ist es, wenn im Schulterbereich des Fahrzeugluftreifens die auf der Oberfläche des Profilpositivs des Abriebindikators angeordnete Struktur als Positionierungskennung in demselben Umfangswinkel angeordnet ist, in dem auch der Abriebindikator im Laufstreifenprofil angeordnet ist. Somit ist einerseits die Positionierung des Abriebindikators gut sichtbar in dem Schulterbereich kenntlich gemacht, so dass der Fahrzeugführer weiß, wo er den Abriebsindikator im Laufstreifenprofil findet. Andererseits ist durch die Struktur erkenntlich, welcher Abriebindikator im diesem Umfangswinkel angeordnet ist.

Der Abriebindikator muss nicht zwingend an Formsegmentgrenzen der den Reifen formenden Vulkanisierform angeordnet sein.

Weitere Merkmale, Vorteile und Einzelheiten der Erfindung werden anhand der Zeichnungen, die schematische Ausführungsbeispiele darstellen, näher erläutert. Es zeigen die
- Fig.1: einen Profilausschnitt eines erfindungsgemäßen Fahrzeugluftreifens mit zwei Abriebindikatoren und einer Positionierungskennung;
- Fig.2: eine vergrößerte Darstellung des Abriebindikators der Fig.1.

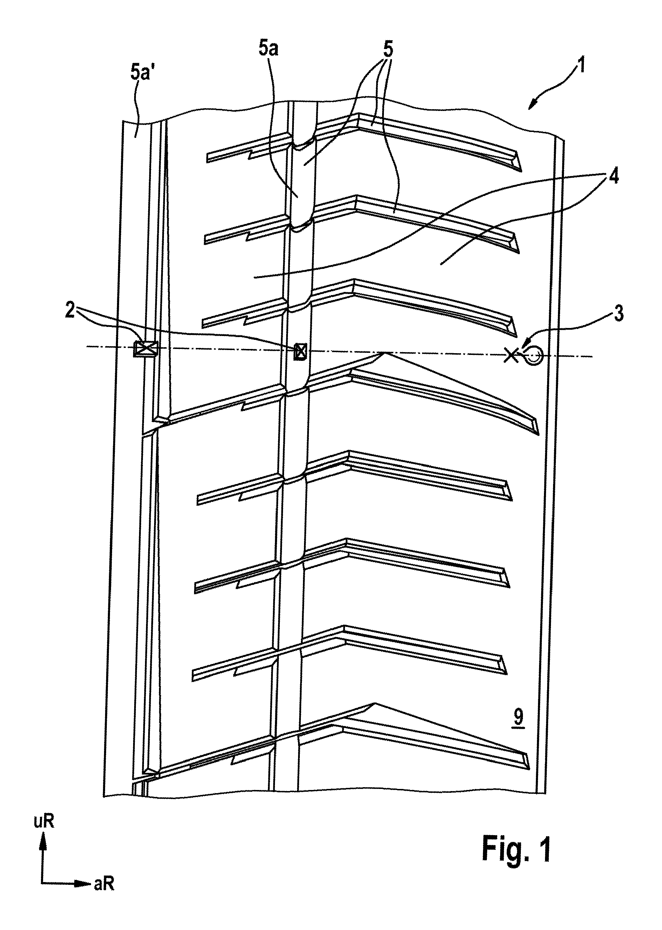

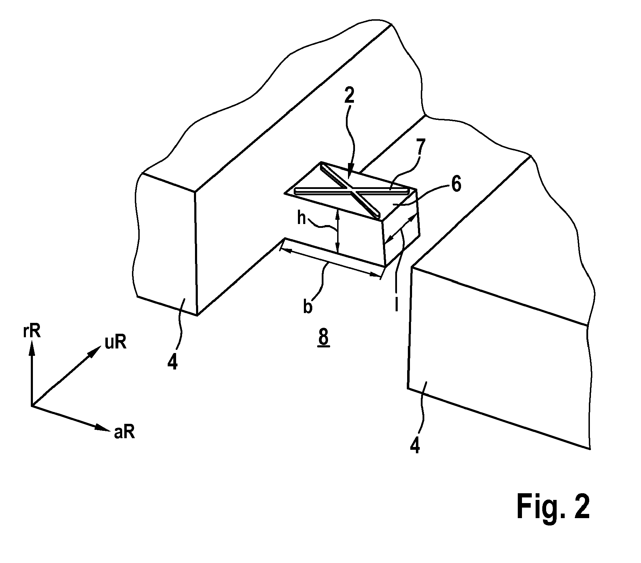

Die **Fig.1** zeigt einen Ausschnitt eines Profils 1 eines erfindungsgemäßen Fahrzeugluftreifens mit zwei Abriebindikatoren 2 und einer Positionierungskennung 3. In der **Fig.2** ist einer dieser Abriebindikatoren 2 vergrößert und stärker schematisiert dargestellt. In der folgenden Beschreibung werden die Fig.1 und Fig.2 gemeinsam beschrieben. Der erfindungsgemäße Fahrzeugluftreifen weist eine mantelförmigen Lauffläche auf, deren Profilgestaltung aus Profilpositiven 4 besteht, wobei die Profilpositiven 4 durch Rillen 5 voneinander getrennt sind. Wenigstens eine Rille 5 ist eine Umfangsrille 5a 5a'.

Die beiden Abriebindikatoren 2 sind in ihrer Ausgestaltung identisch und sind ein in etwa rechteckiges Profilpositiv 4 einer bestimmten Höhe h, nämlich der Höhe h der anzuzeigenden Restprofiltiefe. Die Höhe h bemisst sich vom Rillengrund 8 in Richtung radial außen aR (Pfeil). Die Höhe h ist geringer als die Höhe der Profilpositiven 4 des neuwertigen Laufstreifens. Die Abriebindikatoren 2 sind in verschiedenen Umfangsrillen 5a, 5a' angeordnet und weisen auf der der mantelförmigen Laufstreifenfläche parallelen Fläche 6 des Abriebindikators 2 eine erhabene Struktur 7, hier die Form eines Kreuzes, auf, nach dessen Abrieb die anzuzeigende Restprofiltiefe erreicht ist. Der Abriebindikator 2 ist in einem Sommerreifenlaufstreifenprofil angeordnet. Der Abriebindikator 2 weist vom Rillengrund 8 bis zu der Fläche 6 eine Höhe h von 3mm auf. Die erhabene Struktur weist eine radiale Höhe von 0,5mm auf und ist zur besseren optischen Kenntlichkeit andersfarbig als das übrige Profil gestaltet. Bei Abrieb der erhabenen Kreuzstruktur erkennt der Fahrzeugführer, dass das Profil seines Fahrzeugreifens eine Restprofiltiefe von 3mm erreicht hat, ab deren Unterschreitung an eine erhöhte Aquaplaninggefahr besteht.

Jeder Abriebindikator 2 weist eine Breite b auf, die maximal der halben Breite der Umfangsrille 5a entspricht, in der er angeordnet ist. Somit ist weiterhin ein gutes Wasserdrainagevermögen ermöglicht. Die Länge 1 des Abriebindikators 2 in Umfangsrichtung beträgt 3mm.

Der Abriebindikator 2 ist in Umfangsrichtung uR beabstandet von einer in die Umfangsrille 5a einmündenden Querrille 5 angeordnet ist.

Dieser Aquaplaning-Abriebindikator kann zusätzlich zu den Abriebindikatoren von 1,6mm, der gesetzlich vorgeschriebenen Restprofiltiefe bei Sommerreifen, angeordnet sein.

Im Schulterbereich des Fahrzeugluftreifens ist die auf der Oberfläche des Profilpositivs des Abriebindikators angeordnete Struktur als Positionierungskennung 3 in demselben Umfangswinkel angeordnet ist, in dem auch der Abriebindikator 2 im Laufstreifenprofil angeordnet ist. Somit ist einerseits die Positionierung des Abriebindikators trotz Aufstand des Reifens auf seiner Lauffläche gut sichtbar in dem Schulterbereich kenntlich gemacht, so dass der Fahrzeugführer weiß, an welcher Stelle er den Abriebsindikator im Laufstreifenprofil findet. Andererseits ist durch die Wiederholung der Struktur 7 im Schulterbereich 9 erkenntlich, welcher Abriebindikator in diesem Umfangswinkel angeordnet ist.

### Bezugszeichenliste (Teil der Beschreibung)

- 1: Profil
- 2: Abriebindikator
- 3: Positionierungskennung
- 4: Profilpositiv
- 5: Rille
- 5a: Umfangsrille
- 6: Fläche
- 7: erhabene Struktur
- 8: Rillengrund
- 9: Reifenschulter

- h: Höhe des Abriebindikators
- b: axiale Breite des Abriebindikators
- 1: umfängliche Länge des Abriebindikators

- rR: radiale Richtung
- aR: axiale Richtung
- uR: umfängliche Richtung

## Patentansprüche

1. Fahrzeugluftreifen mit einer mantelförmigen Lauffläche, welche eine Profilgestaltung (1) aus Profilpositiven (4) aufweist, wobei die Profilpositiven (4) durch Rillen (5) voneinander getrennt sind, wobei wenigstens eine Rille eine Hauptrille (5a) ist und wobei wenigstens ein Abriebindikator (2) in der Lauffläche angeordnet ist,
**dadurch gekennzeichnet, dass** der Abriebindikator (2) ein Profilpositiv (4) einer bestimmten Höhe (h), nämlich der Höhe der anzuzeigenden Restprofiltiefe ist, dass der Abriebindikator (2) in der Hauptrille (5a) angeordnet ist, dass der Abriebindikator (2) eine axiale Breite (b) aufweist, welche höchstens der halben Breite der Hauptrille (5a) entspricht und dass auf der, der mantelförmigen Fläche parallelen Fläche (6) des Abriebindikators (2) eine erhabene Struktur (7) angeordnet ist, nach deren Abrieb die anzuzeigende Restprofiltiefe erreicht ist.

2. Fahrzeugluftreifen nach Anspruch 1,
**dadurch gekennzeichnet, dass** die Hauptrille eine Umfangsrille (5a) ist.

3. Fahrzeugluftreifen nach einem der vorangehenden Ansprüche,
**dadurch gekennzeichnet, dass** die erhabene Struktur (7) eine Erhöhung von 0,1mm bis 1mm ist.

4. Fahrzeugluftreifen nach einem der vorangehenden Ansprüche,
**dadurch gekennzeichnet, dass** die erhabene Struktur (7) als Erhöhung zur besseren Kenntlichkeit aus einer anderen Kautschukmischung mit optisch anderen Eigenschaften, vorzugsweise einer anderen Farbe, besteht.

5. Fahrzeugluftreifen nach einem der vorangehenden Ansprüche,
**dadurch gekennzeichnet, dass** die Struktur (7) die Form eines Kreuzes darstellt.

6. Fahrzeugluftreifen nach zumindest einem der vorangehenden Ansprüche,
**dadurch gekennzeichnet, dass** der Abriebindikator (2) in Umfangsrichtung beabstandet von einer in die Umfangsrille einmündenden Querrille (5) angeordnet ist.

7. Fahrzeugluftreifen nach zumindest einem der vorangehenden Ansprüche,
**dadurch gekennzeichnet, dass** das Profilpositiv des Abriebindikators (2) in etwa die Form eines Rechtecks aufweist.

8. Fahrzeugluftreifen nach zumindest einem der vorangehenden Ansprüche,
**dadurch gekennzeichnet, dass** das Profilpositiv des Abriebindikators (2) ein axiale Breite (b) von 3mm, eine Höhe (h) von 3mm und eine Länge (1) in Umfangsrichtung von mindestens 3mm aufweist.

9. Fahrzeugluftreifen nach zumindest einem der vorangehenden Ansprüche,
**dadurch gekennzeichnet, dass** im Schulterbereich (9) des Fahrzeugluftreifens die auf der Fläche (6) des Profilpositivs des Abriebindikators (2) angeordnete Struktur (7) in demselben Umfangswinkel angeordnet ist, in dem auch der Abriebindikator (2) im Laufstreifenprofil angeordnet ist.

10. Fahrzeugluftreifen nach einem oder mehreren der vorangehenden Ansprüche,
**dadurch gekennzeichnet, dass** der Abriebindikator (2) nicht zwingend an Formsegmentgrenzen der den Reifen formenden Vulkanisierform angeordnet ist.
